# EUROPÄISCHE PATENTSCHRIFT

(11) **EP 4 019 338 B1**
(45) Veröffentlichungstag und Bekanntmachung des Hinweises auf die Patenterteilung: **09.10.2024**
(21) Anmeldenummer: 21216630.0
(22) Anmeldetag: 21.12.2021
(51) Int. Cl.: B60R 13/02, B32B 7/023, B29C 45/14, B29C 45/16, B60Q 9/00, F21S 43/00, B60R 13/04

(54) **PARTIELL DURCHLEUCHTBARES AUSSENVERKLEIDUNGSTEIL FÜR EIN KRAFTFAHRZEUG UND VERFAHREN ZUR HERSTELLUNG EINES AUSSENVERKLEIDUNGSTEILS**
PARTIALLY TRANSLUCENT EXTERIOR COVERING PART FOR A MOTOR VEHICLE AND METHOD FOR PRODUCING AN EXTERIOR COVERING PART
PARTIE DE REVÊTEMENT EXTÉRIEUR PARTIELLEMENT TRANSLUCIDE POUR UN VÉHICULE AUTOMOBILE ET PROCÉDÉ DE FABRICATION D'UNE PARTIE DE REVÊTEMENT EXTÉRIEUR

(30) Priorität: 28.12.2020 DE 102020134943
(43) Veröffentlichungstag der Anmeldung: 29.06.2022
(73) Patentinhaber: REHAU Automotive SE & Co. KG, 95111 Rehau (DE)
(72) Erfinder: Göschel, Rick, 95183 Feilitzsch (DE)

(56) Entgegenhaltungen:
- DE-A1- 102012 003 200
- DE-A1- 102015 214 247
- DE-U1- 202020 104 697

## Beschreibung

Die vorliegende Erfindung betrifft ein partiell durchleuchtbares Außenverkleidungsteil für ein Kraftfahrzeug, umfassend einen Grundkörper aus einem transluzenten oder intransparenten Polymermaterial, wobei der Grundkörper eine Wandstärke, eine bei bestimmungsgemäßer Verwendung am Kraftfahrzeug sichtbare Außenseite und eine der Außenseite gegenüberliegende Innenseite aufweist, und wobei der Grundkörper wenigstens eine den Grundkörper durchsetzende Ausnehmung aufweist.

Die Durchleuchtung von vorstehend beschriebenen Außenverkleidungsteilen ist aktuell in zwei Ausführungsformen möglich. Für eine Ausführung werden transparente und ungefüllte Polymermaterialien und für die andere Variante transluzente aber gefüllte Materialien verwendet. Dabei können "Großkomponenten" wie beispielsweise Stoßfängerverkleidungen nur mittels transluzenter Polymermaterialien hergestellt werden, da diverse Füllstoffe für die Erreichung bestimmter mechanischer Eigenschaften (insbesondere Schlagzähigkeit und Duktilität) notwendig sind und diese Füllstoffe das durch das Polymermaterial hindurchtretende Licht brechen und streuen. Kleinere Bauteile oder Blenden können als transparente Klar-komponenten hergestellt werden, da hier die mechanischen Eigenschaften keinen so hohen Anforderungen genügen müssen. Diese kleineren Bauteile oder Blenden werden nachträglich als sogenannte Setzteile in den Großkomponenten verbaut. Unter den Aspekt einer nahtlosen (seamless) Oberflächen mit Lichtintegration ist eine separate Integration von Setzteilen jedoch nicht zielführend, da es hierbei immer die "Nahtlosigkeit" störende Fügespalte gibt.

Entsprechende Außenverkleidungsteile können den Dokumenten DE 20 2020 104 697 U1 und DE 10 2012 003 200 A1 entnommen werden. Ein ähnlich aufgebautes Innenverkleidungsteil zeigt das Dokument DE 10 2015 214 247 A1.

Die Erfindung stellt sich daher die Aufgabe ein Außenverkleidungsteil mit den eingangs beschriebenen Merkmalen anzugeben, das gegenüber dem Stand der Technik eine verbesserte Oberflächenbeschaffenheit der Außenseite aufweist.

Erfindungsgemäß wird diese Aufgabe gelöst durch ein Partiell durchleuchtbares Außenverkleidungsteil für ein Kraftfahrzeug umfassend:
- einen Grundkörper aus einem transluzenten oder intransparenten Polymermaterial,

wobei der Grundkörper eine Wandstärke, eine bei bestimmungsgemäßer Verwendung am Kraftfahrzeug sichtbare Außenseite und eine der Außenseite gegenüberliegende Innenseite aufweist, und
wobei der Grundkörper wenigstens eine den Grundkörper durchsetzende Ausnehmung aufweist,
wobei zur partiellen Durchleuchtung des Grundkörpers ein die Ausnehmung ausfüllendes Lichtfenster aus einem transparenten Polymermaterial, welches für Spektralbereiche des sichtbaren Lichts mit einer geringen Absorption durchstrahlbar ist, vorgesehen ist,
wobei der Grundkörper und das Lichtfenster stoffschlüssig miteinander verbunden und in einem Mehrkomponenten-Spritzgussverfahren hergestellt sind.

Die erfindungsgemäße Ausbildung des Außenverkleidungsteils ermöglicht es den Übergang von Lichtfenster zu Grundkörper so zu minimieren, dass dieser Übergang fast nicht mit bloßem Auge zu erkennen ist. Durch die Realisierung des Außenverkleidungsteils im Mehrkomponenten-Kunststoffspritzguss werden zudem Montageschritte und/oder Fertigungsschritte reduziert. Hierdurch wird gleichzeitig die Gefahr des Fehlverbaus der unterschiedlichen Baugruppen minimiert. Das transparente Polymermaterial des Lichtfensters ermöglicht es zudem nicht nur bloße Lichteffekte, sondern richtige Funktionsbeleuchtungen wie beispielsweise das Fern, oder Abblendlicht hinter dem Lichtfenster anzuordnen und durch das Außenverkleidungsteil hindurchstrahlen zu lassen. Das Lichtfenster kann so ausgebildet sein, dass es den Rand der Ausnehmung hintergreift und bereichsweise auf der Innenseite aufliegt. Hierdurch ergibt sich ein verbesserter Verbund von Lichtfenster zu Grundkörper. Zudem ist der Übergangsbereich von Lichtfenster zu Grundkörper dann rückseitig abgedeckt, was auch auf der Sichtseite zu einer verringerten Sichtbarkeit dieses Übergangsbereichs beiträgt.

Zusätzlich ist eine, auf der Außenseite angeordnete Kaschierfolie vorgesehen, wobei die Kaschierfolie so positioniert ist, dass diese den Übergangsbereich von Grundkörper zu Lichtfenster außenseitig überdeckt. Die Kaschierfolie kann hierbei nur den Übergangsbereich bedecken oder kann den gesamten Grundkörper oder Teile des Grundkörpers bedecken.

Die Kaschierfolie kann aus einem transparenten oder transluzenten Material besteht und das Lichtfenster teilweise oder vollständig oder zusätzlich das Lichtfenster teilweise oder vollständig überdecken.

Die Verwendung einer Kaschierfolie reduziert ebenfalls die Sichtbarkeit des Übergangsbereichs von Lichtfenster zu Grundkörper.

Die Kaschierfolie kann insbesondere nur im Bereich auf und/oder um das Lichtfenster herum, innerhalb eines Wanddicken-Rücksprungs oder Rücksprungs des Grundkörpers angeordnet sein.

Auf der Außenseite kann zumindest im Bereich des Lichtfensters eine ein- oder mehrschichtige Beschichtung, vorzugsweise gebildet durch eine Lackschicht (oder mehrere Lackschichten) oder eine Lackfolie (oder mehrere Lackfolien), vorgesehen sein, wobei die Beschichtung die Spektralbereiche des sichtbaren Lichts weitestgehend absorbiert, wobei zur partiellen Durchleuchtung des Grundkörpers die Beschichtung eine Vielzahl von Perforationen aufweist, die die Beschichtung vollständig durchdringen.

Für den Fall, dass die Beschichtung durch eine Lackfolie gebildet ist, kann diese Lackfolie mehrschichtig aufgebaut sein. Hierbei kann die Lackfolie wenigstens eine Trägerfolie, bevorzugt aus einem transluzenten oder transparenten Material, welches für Spektralbereiche des sichtbaren Lichts mit einer geringen Absorption durchstrahlbar ist, und wenigsten eine auf der Trägerfolie angeordnete intransparente oder farbgebende Lackschicht umfassen. Die Lackschicht auf der Trägerfolie kann eine Dicke im Bereich von 5 µm bis 100 µm, bevorzugt im Bereich von 10 µm bis 60 µm aufweisen. Die Trägerfolie selbst kann eine Dicke im Bereich von 50 µm bis 1000 µm, bevorzugt im Bereich von 150 µm bis 600 µm aufweisen.

Die Perforationen können regelmäßig und/oder versetzt zueinander angeordnet sein. Es ist jedoch auch denkbar, dass die Perforationen untereinander keinen einheitlich gleichen Abstand aufweisen.

Über der perforierten Beschichtung kann eine die Beschichtung und die Perforationen versiegelnde Klarlackschicht, welche für Spektralbereiche des sichtbaren Lichts mit einer geringen Absorption durchstrahlbar ist, aufgebracht sein.

Die Klarlackschicht kann auch nur Grundkörper und Lichtfenster oder nur die Kaschierfolie versiegeln, für den Fall, dass keine Beschichtung vorhanden ist.

Der Klarlack der Klarlackschicht kann insbesondere ein UV-härtender Klarlack sein.

Das transparente Polymermaterial des Lichtfensters kann insbesondere Polycarbonat und/oder Acrylnitril-Butadien-Styrol und/oder Polymethylmethacrylat umfassen oder hieraus gebildet sein.

Das transluzente oder intransparente Polymermaterial des Grundkörpers kann bevorzugt Polypropylen und/oder Polycarbonat und/oder Polyethylenterephthalat und/oder Polycarbonat und/oder Acrylnitril-Butadien-Styrol und/oder Polymethylmethacrylat und/oder Polyamid enthalten oder hieraus gebildet sein.

Das transluzente oder intransparente Polymermaterial des Grundkörpers kann zusätzlich einen Füllstoff aufweisen. Der Füllstoff kann Wollastonit und/oder amorphes Siliziumdioxid und/oder Cristobalit und/oder Feldspat und/oder Quarzgut und/oder Glas und/oder Glasfasern und/oder Ruß und/oder Talkum und/oder Kohlenstoff und/oder Titandioxid umfassen.

Der Füllstoffgehalt des Füllstoffs in dem transluzenten oder intransparenten Polymermaterial des Grundkörpers weist bevorzugt einen Wert von 10 Vol.% bis 50 Vol.%, weiter bevorzugt von 15 Vol.% bis 35 Vol.% auf.

Der Grundkörper weist bevorzugt eine Wandstärke im Bereich von 0,8 mm bis 4,5 mm auf. Auf der Klarlackschicht kann eine zusätzliche Schutzschicht vorgesehen sein, wobei die zusätzliche Schutzschicht insbesondere ein Silan oder eine Silanverbindung umfassen kann.

Das Außenverkleidungsteil ist bevorzugt eine Stoßfängerverkleidung oder eine Heckklappen-verkleidung oder eine Säulenverkleidung oder eine Türverkleidung oder eine Kotflügelverkleidung oder eine Dachverkleidung oder ein Spoiler eines Kraftfahrzeuges, oder ist ein Bauteil oder eine Baugruppe oder ein Bestandteil der vorgenannten Teile.

Teil der Erfindung ist ferner ein System aus einem partiell durchleuchtbaren Außenverkleidungsteil wie vorstehend beschrieben oder nach einem der Ansprüche 1 bis 6 und einem hinter der bestimmungsgemäßen Außenseite des Grundkörpers angeordneten Leuchtelement.

Das Leuchtelement weist bevorzugt eine Mindestleuchtstärke von 500 cd/m² auf.

Ein Verfahren zur Herstellung eines partiell durchleuchtbaren Außenverkleidungsteils, insbesondere eines durchleuchtbaren Außenverkleidungsteils wie vorstehend beschrieben oder nach einem der Ansprüche 1 bis 6, wobei der Grundkörper aus einem transluzenten oder intransparenten Polymermaterial besteht, wobei der Grundkörper eine Wandstärke, eine bei bestimmungsgemäßer Verwendung am Kraftfahrzeug sichtbare Außenseite und eine der Außenseite gegenüberliegende Innenseite aufweist, und wobei der Grundkörper wenigstens eine den Grundkörper durchsetzende Ausnehmung aufweist, wobei zur partiellen Durchleuchtung des Grundkörpers ein die Ausnehmung ausfüllendes Lichtfenster, vorgesehen ist, umfasst die folgenden Schritte:
- Bereitstellen des Grundkörpers;
- Anordnen des Lichtfensters aus einem transparenten Material, welches für Spektralbereiche des sichtbaren Lichts mit einer geringen Absorption durchstrahlbar ist, innerhalb der Ausnehmung;
- stoffschlüssiges Verbinden von Grundkörper und Lichtfenster;
wobei diese Schritte Teil eines Mehrkomponenten-Spritzgussverfahren sind.

Zusätzlich ist wenigstens eine, auf der Außenseite angeordnete Kaschierfolie vorgesehen, wobei die Kaschierfolie so positioniert ist, dass diese den Übergangsbereich von Grundkörper zu Lichtfenster außenseitig überdeckt, wobei die Kaschierfolie in das zur Durchführung des Mehrkomponenten-Spritzgussverfahrens verwendete Spritzgusswerkzeug eingelegt, und von dem Material des Lichtfensters und dem Material des Grundkörpers hinterspritzt wird.

In einem nachfolgenden Schritt kann auf der Außenseite zumindest im Bereich des Lichtfensters eine ein- oder mehrschichtige Beschichtung, vorzugsweise gebildet durch eine Lackschicht oder eine Lackfolie, aufgebracht werden, wobei die Beschichtung die Spektralbereiche des sichtbaren Lichts weitestgehend absorbiert, wobei zur partiellen Durchleuchtung des Grundkörpers die Beschichtung mit einer Vielzahl von Perforationen versehen ist oder wird, die die Beschichtung vollständig durchdringen. Der Schritt des Versehens der Beschichtung mit einer Vielzahl von Perforationen kann beispielsweise mittels eines Laser-strahls oder mittels mehrerer Laserstrahlen erfolgen.

Über der perforierten Beschichtung eine die Beschichtung und die Perforationen versiegelnde Klarlackschicht, welche für Spektralbereiche des sichtbaren Lichts mit einer geringen Absorption durchstrahlbar ist, aufgebracht werden.

Im Folgenden wird die Erfindung anhand lediglich Ausführungsbeispiele darstellender Zeichnungen erläutert. Es zeigen schematisch:
Fig. 1 eine schematische Darstellung der Teil-Außenansicht eines an einem Kraftfahrzeug montierten erfindungsgemäßen Außenverkleidungsteils;
Fig. 2-7 Schnittdarstellungen durch den Schichtaufbau von erfindungsgemäßen Außenverkleidungsteilen.

In den Figuren werden gleiche oder funktionsgleiche Elemente mit den gleichen Bezugszeichen versehen.

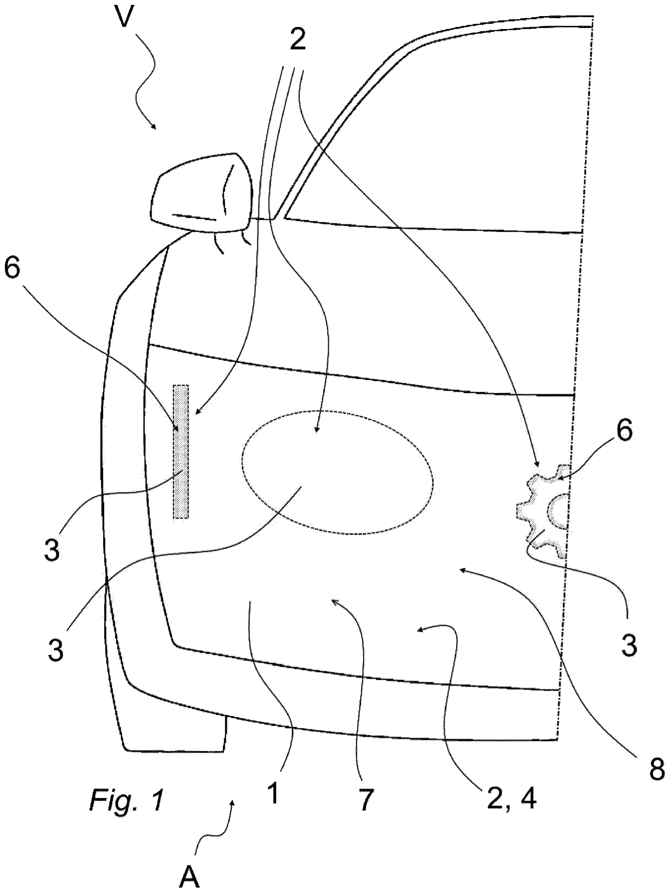

Die Fig. 1 zeigt eine Teil-Außenansicht der Sichtseite bzw. Außenseite A eines Kraftfahrzeugs V mit einem erfindungsgemäßen partiell durchleuchtbaren Außenverkleidungsteil für das Kraftfahrzeug V, umfassend:
- einen Grundkörper 1 aus einem transluzenten oder intransparenten Polymermaterial, wobei der Grundkörper 1 eine Wandstärke, eine bei bestimmungsgemäßer Verwendung am Kraftfahrzeug V sichtbare Außenseite A und eine der Außenseite gegenüberliegende Innenseite I aufweist.

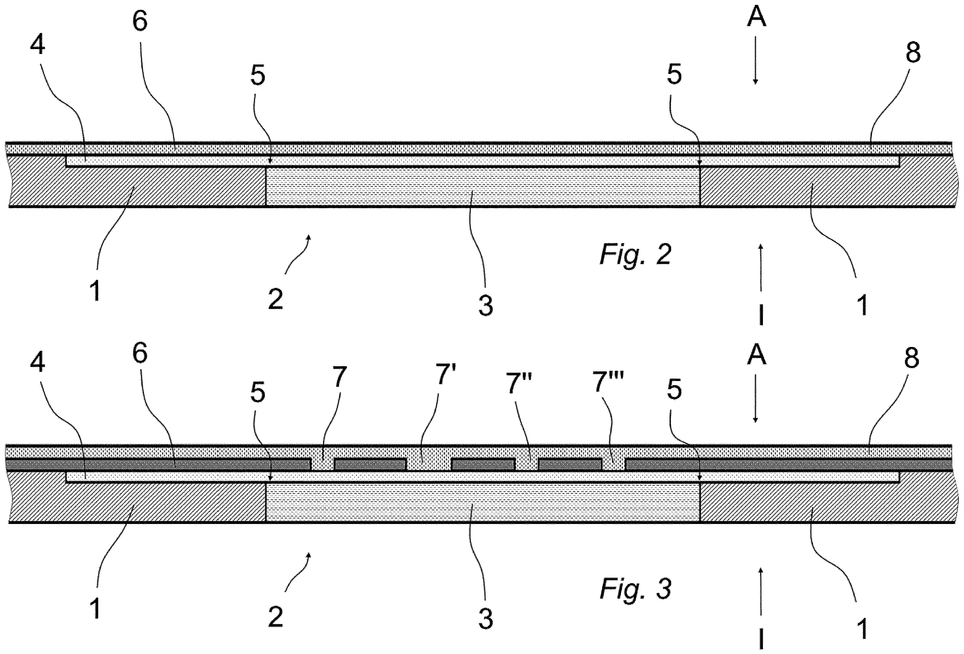

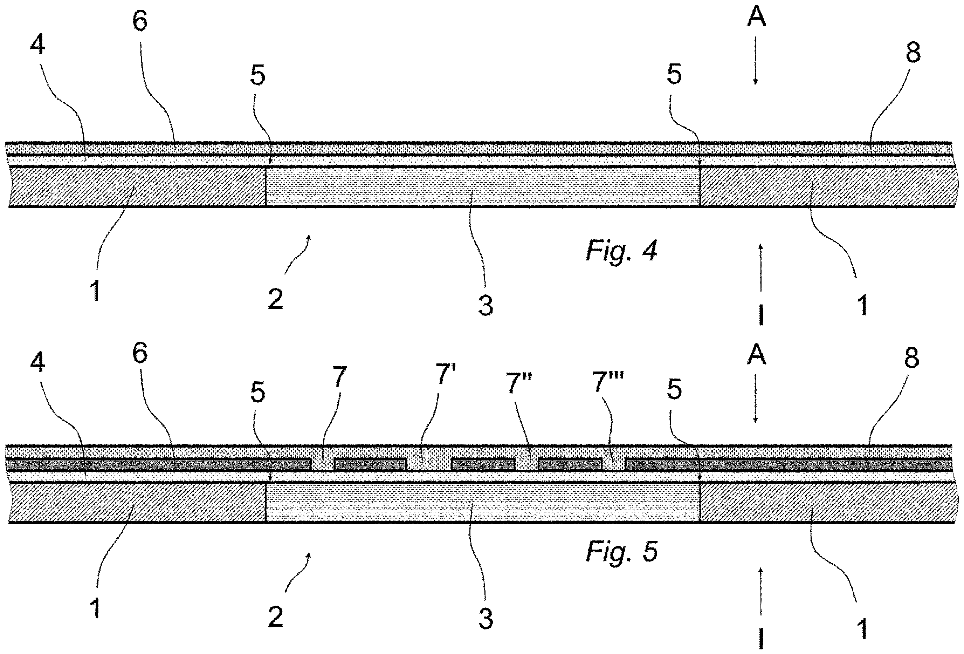

Der Grundkörper 1 weist ferner wenigstens eine den Grundkörper 1 durchsetzende Ausnehmung 2 auf. Zur partiellen Durchleuchtung des Grundkörpers 1 ist ein die Ausnehmung 2 ausfüllendes Lichtfenster 3 aus einem transparenten Polymermaterial, welches für Spektral-bereiche des sichtbaren Lichts mit einer geringen Absorption durchstrahlbar ist, vorgesehen (vgl. Fig. 2 bis 7). Der Grundkörper 1 und das Lichtfenster 3 sind stoffschlüssig miteinander verbunden und in einem Mehrkomponenten-Spritzgussverfahren hergestellt.

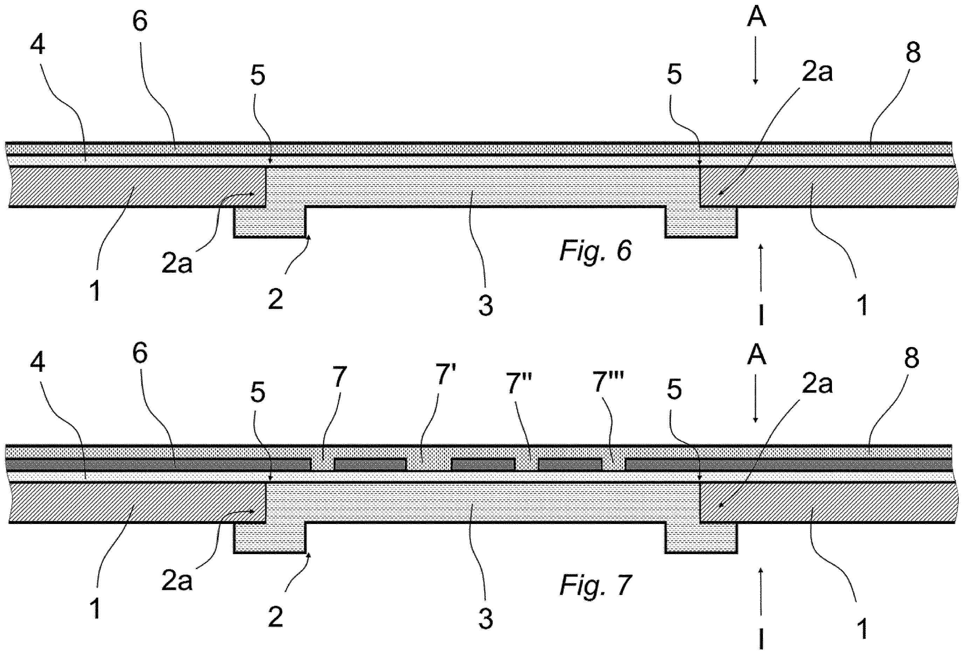

In den Varianten gemäß Fig. 6 und Fig. 7 ist das Lichtfenster 3 so ausgebildet, dass es den Rand 2a der Ausnehmung 2 hintergreift und bereichsweise auf der Innenseite I aufliegt.

In den Fig. 2 bis Fig. 7 ist erkennbar, dass zusätzlich wenigstens eine, auf der Außenseite A angeordnete Kaschierfolie 4 vorgesehen ist, wobei die Kaschierfolie 4 so positioniert ist, dass diese den Übergangsbereich 5 von Grundkörper 1 zu Lichtfenster 3 außenseitig überdeckt. Vorliegend besteht die Kaschierfolie 4 aus einem transparenten Material und überdeckt das Lichtfenster 3 teilweise oder vollständig.

In den Fig. 2 und Fig. 3 ist erkennbar, das die Kaschierfolie 4 nur im Bereich auf und um das Lichtfenster 3 herum, innerhalb eines Wanddicken-Rücksprungs des Grundkörpers 1 angeordnet ist.

Auf der Außenseite A ist in den Varianten gemäß Fig. 3, Fig. 5 und Fig. 7 zumindest im Bereich des Lichtfensters 3 eine ein- oder mehrschichtige Beschichtung 6, vorzugsweise gebildet durch eine Lackschicht oder eine Lackfolie, vorgesehen. Die Beschichtung 6 absorbiert die Spektralbereiche des sichtbaren Lichts weitestgehend absorbiert, wobei zur partiellen Durchleuchtung des Grundkörpers 1 die Beschichtung 6 eine Vielzahl von Perforationen 7, 7', 7", 7‴ aufweist, die die Beschichtung 6 vollständig durchdringen. Über der perforierten Beschichtung 6 ist eine die Beschichtung 6 und die Perforationen 7, 7', 7", 7‴ versiegelnde Klarlackschicht 8, welche für Spektralbereiche des sichtbaren Lichts mit einer geringen Absorption durchstrahlbar ist, aufgebracht.

In den Varianten gemäß Fig. 2, Fig. 4 und Fig. 6 ist ebenfalls eine Klarlackschicht 8 aufgebracht, die jedoch den Grundkörper 1 und/oder die Kaschierfolie 4 versiegelt.

Ein Verfahren zur Herstellung der vorstehend beschriebenen partiell durchleuchtbaren Außenverkleidungsteile kann wie folgt beschrieben werden:
Verfahren zur Herstellung eines partiell durchleuchtbaren Außenverkleidungsteils für ein Kraftfahrzeug V, wobei der Grundkörper 1 aus einem transluzenten oder intransparenten Polymermaterial besteht, wobei der Grundkörper 1 eine Wandstärke, eine bei bestimmungsgemäßer Verwendung am Kraftfahrzeug V sichtbare Außenseite A und eine der Außenseite gegenüberliegende Innenseite I aufweist, und wobei der Grundkörper 1 wenigstens eine den Grundkörper 1 durchsetzende Ausnehmung 2 aufweist, wobei zur partiellen Durchleuchtung des Grundkörpers 1 ein die Ausnehmung 2 ausfüllendes Lichtfenster 3, vorgesehen ist,
umfasst die folgenden Schritte:
   - Bereitstellen des Grundkörpers 1 ;
   - Anordnen des Lichtfensters 3 aus einem transparenten Material, welches für Spektralbereiche des sichtbaren Lichts mit einer geringen Absorption durchstrahlbar ist, innerhalb der Ausnehmung 2;
   - stoffschlüssiges Verbinden von Grundkörper 1 und Lichtfenster 3;
wobei diese Schritte Teil eines Mehrkomponenten-Spritzgussverfahren sind.

Zusätzlich kann in einigen der Varianten wenigstens eine, auf der Außenseite A angeordnete Kaschierfolie 4 vorgesehen sein, wobei die Kaschierfolie 4 so positioniert ist, dass diese den Übergangsbereich 5 von Grundkörper 1 zu Lichtfenster 3 außenseitig überdeckt, wobei die Kaschierfolie in das zur Durchführung des Mehrkomponenten-Spritzgussverfahrens verwendete Spritzgusswerkzeug eingelegt, und von dem Material des Lichtfensters 3 und dem Material des Grundkörpers 1 hinterspritzt wird.

Bei einigen der Varianten kann in einem nachfolgenden Schritt auf der Außenseite A zumindest im Bereich des Lichtfensters 3 eine ein- oder mehrschichtige Beschichtung 6, vorzugsweise gebildet durch eine Lackschicht oder eine Lackfolie, aufgebracht werden, wobei die Beschichtung 6 die Spektralbereiche des sichtbaren Lichts 3 weitestgehend absorbiert, wo-bei zur partiellen Durchleuchtung des Grundkörpers 1 die Beschichtung 6 mit einer Vielzahl von Perforationen 7, 7', 7", 7‴ versehen ist oder wird, die die Beschichtung 6 vollständig durchdringen. Über der perforierten Beschichtung 6 wird eine die Beschichtung 6 und die Perforationen 7, 7', 7", 7‴ versiegelnde Klarlackschicht 8, welche für Spektralbereiche des sichtbaren Lichts mit einer geringen Absorption durchstrahlbar ist, aufgebracht.

## Patentansprüche

1. Partiell durchleuchtbares Außenverkleidungsteil für ein Kraftfahrzeug (V) umfassend:
- einen Grundkörper (1) aus einem transluzenten oder intransparenten Polymermaterial,
wobei der Grundkörper (1) eine Wandstärke, eine bei bestimmungsgemäßer Verwendung am Kraftfahrzeug (V) sichtbare Außenseite (A) und eine der Außenseite gegenüberliegende Innenseite (I) aufweist, und
wobei der Grundkörper (1) wenigstens eine den Grundkörper (1) durchsetzende Ausnehmung (2) aufweist,
wobei zur partiellen Durchleuchtung des Grundkörpers (1) ein die Ausnehmung (2) ausfüllendes Lichtfenster (3) aus einem transparenten Polymermaterial, welches für Spektralbereiche des sichtbaren Lichts mit einer geringen Absorption durchstrahlbar ist, vorgesehen ist,
**dadurch gekennzeichnet, dass**
der Grundkörper (1) und das Lichtfenster (3) stoffschlüssig miteinander verbunden und in einem Mehrkomponenten-Spritzgussverfahren hergestellt sind und, dass
zusätzlich wenigstens eine, auf der Außenseite (A) angeordnete Kaschierfolie (4) vorgesehen ist, wobei die Kaschierfolie (4) so positioniert ist, dass diese den Übergangsbereich (5) von Grundkörper (1) zu Lichtfenster (3) außenseitig überdeckt.

2. Partiell durchleuchtbares Außenverkleidungsteil nach Anspruch 1, **dadurch gekennzeichnet, dass** das Lichtfenster (3) so ausgebildet ist, dass es den Rand (2a) der Ausnehmung (2) hintergreift und bereichsweise auf der Innenseite (I) aufliegt.

3. Partiell durchleuchtbares Außenverkleidungsteil nach Anspruch 1 oder 2, **dadurch gekennzeichnet, dass** die Kaschierfolie (4) aus einem transparenten oder transluzenten Material besteht und das Lichtfenster (3) teilweise oder vollständig überdeckt.

4. Partiell durchleuchtbares Außenverkleidungsteil nach einem der vorstehenden Ansprüche, **dadurch gekennzeichnet, dass** auf der Außenseite (A) zumindest im Bereich des Lichtfensters (3) eine ein- oder mehrschichtige Beschichtung (6), vorzugsweise gebildet durch eine Lackschicht oder eine Lackfolie, vorgesehen ist, wobei die Beschichtung (6) die Spektralbereiche des sichtbaren Lichts (3) weitestgehend absorbiert, wobei zur partiellen Durchleuchtung des Grundkörpers (1) die Beschichtung (6) eine Vielzahl von Perforationen (7, 7', 7", 7‴) aufweist, die die Beschichtung (6) vollständig durchdringen.

5. Partiell durchleuchtbares Außenverkleidungsteil nach Anspruch 4, **dadurch gekennzeichnet, dass** über der perforierten Beschichtung (6) eine die Beschichtung (6) und die Perforationen (7, 7', 7", 7‴) versiegelnde Klarlackschicht (8), welche für Spektralbereiche des sichtbaren Lichts mit einer geringen Absorption durchstrahlbar ist, aufgebracht ist.

6. Verfahren zur Herstellung eines partiell durchleuchtbaren Außenverkleidungsteils für ein Kraftfahrzeug (V) nach einem der vorstehenden Ansprüche 1 bis 5, wobei der Grundkörper (1) aus einem transluzenten oder intransparenten Polymermaterial besteht,
wobei der Grundkörper (1) eine Wandstärke, eine bei bestimmungsgemäßer Verwendung am Kraftfahrzeug (V) sichtbare Außenseite (A) und eine der Außenseite gegenüberliegende Innenseite (I) aufweist, und
wobei der Grundkörper (1) wenigstens eine den Grundkörper (1) durchsetzende Ausnehmung (2) aufweist,
wobei zur partiellen Durchleuchtung des Grundkörpers (1) ein die Ausnehmung (2) ausfüllendes Lichtfenster (3), vorgesehen ist,
umfassend die folgenden Schritte:
- Bereitstellen des Grundkörpers (1);
- Anordnen des Lichtfensters (3) aus einem transparenten Material, welches für Spektralbereiche des sichtbaren Lichts mit einer geringen Absorption durchstrahlbar ist, innerhalb der Ausnehmung (2);
- stoffschlüssiges Verbinden von Grundkörper (1) und Lichtfenster (3);
**dadurch gekennzeichnet, dass**
diese Schritte Teil eines Mehrkomponenten-Spritzgussverfahren sind und, dass
zusätzlich wenigstens eine, auf der Außenseite (A) angeordnete Kaschierfolie (4) vorgesehen ist, wobei die Kaschierfolie (4) so positioniert ist, dass diese den Übergangsbereich (5) von Grundkörper (1) zu Lichtfenster (3) außenseitig überdeckt, wobei die Kaschierfolie in das zur Durchführung des Mehrkomponenten-Spritzgussverfahrens verwendete Spritzgusswerkzeug eingelegt, und von dem Material des Lichtfensters (3) und dem Material des Grundkörpers (1) hinterspritzt wird.

7. Verfahren zur Herstellung eines partiell durchleuchtbaren Außenverkleidungsteils für ein Kraftfahrzeug (V) nach Anspruch 6, **dadurch gekennzeichnet, dass** in einem nachfolgenden Schritt auf der Außenseite (A) zumindest im Bereich des Lichtfensters (3) eine ein- oder mehrschichtige Beschichtung (6), vorzugsweise gebildet durch eine Lackschicht oder eine Lackfolie, aufgebracht wird, wobei die Beschichtung (6) die Spektralbereiche des sichtbaren Lichts weitestgehend absorbiert, wobei zur partiellen Durchleuchtung des Grundkörpers (1) die Beschichtung (6) mit einer Vielzahl von Perforationen (7, 7', 7", 7‴) versehen ist oder wird, die die Beschichtung (6) vollständig durchdringen.

8. Verfahren zur Herstellung eines partiell durchleuchtbaren Außenverkleidungsteils für ein Kraftfahrzeug (V) nach Anspruch 7, **dadurch gekennzeichnet, dass** über der perforierten Beschichtung (6) eine die Beschichtung (6) und die Perforationen (7, 7', 7", 7‴) versiegelnde Klarlackschicht (8), welche für Spektralbereiche des sichtbaren Lichts mit einer geringen Absorption durchstrahlbar ist, aufgebracht wird.

## Claims

1. Partially translucent outer covering part for a motor vehicle (V) comprising:
- a main body (1) made of a translucent or non-transparent polymer material,
wherein the main body (1) has a wall thickness, an outer side (A) that is visible when used correctly on the motor vehicle (V), and an inner side (I) opposite the outer side, and
wherein the main body (1) has at least one recess (2) passing through the main body (1),
wherein for partial translucency of the main body (1), a light window (3) filling the recess (2) and made of a transparent polymer material, which can be passed through by spectral ranges of visible light with low absorption, is provided,
**characterised in that**
the main body (1) and the light window (3) are connected to one another in an integrally bonded manner and are produced in a multi-component injection moulding process, and **in that**
additionally at least one lamination film (4) disposed on the outer side (A) is provided, wherein the lamination film (4) is positioned such that it covers the transition region (5) from the main body (1) to light window (3) on the outer side.

2. Partially translucent outer covering part according to claim 1, **characterised in that** the light window (3) is configured such that it engages behind the edge (2a) of the recess (2) and rests on the inner side (I) in some regions.

3. Partially translucent outer covering part according to claim 1 or 2, **characterised in that** the lamination film (4) consists of a transparent or translucent material and partially or fully covers the light window (3).

4. Partially translucent outer covering part according to any one of the preceding claims, **characterised in that** a single- or multi-layer coating (6), preferably formed by a layer of paint or a paint film, is provided on the outer side (A) at least in the region of the light window (3), wherein the coating (6) absorbs the spectral ranges of visible light (3) to the greatest possible extent, wherein, for partial translucency of the main body (1), the coating (6) has multiple perforations (7, 7', 7", 7‴), which fully penetrate through the coating (6).

5. Partially translucent outer covering part according to claim 4, **characterised in that** a coat of clear lacquer (8), which is translucent for spectral ranges of visible light with low absorption and seals the coating (6) and the perforations (7, 7', 7", 7‴), is applied over the perforated coating (6).

6. Method for producing a partially translucent outer covering part for a motor vehicle (V) according to any one of preceding claims 1 to 5, wherein the main body (1) consists of a translucent or non-transparent polymer material,
wherein the main body (1) has a wall thickness, an outer side (A) that is visible when used correctly on the motor vehicle (V), and an inner side (I) opposite the outer side, and
wherein the main body (1) has at least one recess (2) passing through the main body (1),
wherein for partial translucency of the main body (1), a light window (3) filling the recess (2) is provided,
said method comprising the following steps:
- providing the main body (1);
- disposing the light window (3), which is made of a transparent material translucent for spectral ranges of visible light with low absorption, within the recess (2);
- connecting the main body (1) and light window (3) in an integrally bonded manner;
**characterised in that**
these steps are part of a multi-component injection moulding process, and **in that**
additionally at least one lamination film (4) disposed on the outer side (A) is provided, wherein the lamination film (4) is positioned such that it covers the transition region (5) from the main body (1) to light window (3) on the outer side, wherein the lamination film is placed in the injection moulding tool used to carry out the multi-component injection moulding process and is back-moulded with the material of the light window (3) and the material of the main body (1).

7. Method for producing a partially translucent outer covering part for a motor vehicle (V) according to claim 6, **characterised in that**, in a subsequent step, a single- or multi-layer coating (6), preferably formed by a layer of paint or a paint film, is applied on the outer side (A) at least in the region of the light window (3), wherein the coating (6) absorbs the spectral ranges of visible light (3) to the greatest possible extent, wherein, for partial translucency of the main body (1), the coating (6) is or will be provided with multiple perforations (7, 7', 7", 7‴), which fully penetrate through the coating (6).

8. Method for producing a partially translucent outer covering part for a motor vehicle (V) according to claim 7, **characterised in that** a coat of clear lacquer (8), which is translucent for spectral ranges of visible light with low absorption and seals the coating (6) and the perforations (7, 7', 7", 7‴), is applied over the perforated coating (6).

## Revendications

1. Partie d'habillage extérieure pouvant être éclairée en partie par transparence pour un véhicule à moteur (V) comprenant :
- un corps de base (1) composé d'un matériau polymère translucide ou non transparent,
dans laquelle le corps de base (1) présente une épaisseur de paroi, un côté extérieur (A) visible lors d'une utilisation conforme à l'usage prévu sur le véhicule à moteur (V) et un côté intérieur (I) opposé au côté extérieur, et
dans lequel le corps de base (1) présente au moins un évidement (2) traversant le corps de base (1),
dans lequel une fenêtre lumineuse (3) remplissant l'évidement (2) composée d'un matériau polymère transparent, lequel peut être traversé par un rayonnement pour des domaines spectraux de la lumière visible avec une faible absorption, est prévue pour l'éclairage partiel par transparence du corps de base (1),
**caractérisée en ce que**
le corps de base (1) et la fenêtre lumineuse (3) sont reliés par liaison de matière l'un à l'autre et sont fabriqués dans un procédé de moulage par injection à plusieurs composants, et que
il est prévu en plus au moins un film de contre-collage (4) disposé sur le côté extérieur (A), dans lequel le film de contre-collage (4) est positionné de telle sorte que celui-ci recouvre côté extérieur la zone de transition (5) du corps de base (1) à la fenêtre lumineuse (3).

2. Partie d'habillage extérieure pouvant être éclairée en partie par transparence selon la revendication 1, **caractérisée en ce que** la fenêtre lumineuse (3) est réalisée de telle sorte qu'elle vient en prise par l'arrière avec le bord (2a) de l'évidement (2) et repose par endroits sur le côté intérieur (I).

3. Partie d'habillage extérieure pouvant être éclairée en partie par transparence selon la revendication 1 ou 2, **caractérisée en ce que** le film de contre-collage (4) est constitué d'un matériau transparent ou translucide et recouvre en partie ou en totalité la fenêtre lumineuse (3).

4. Partie d'habillage extérieure pouvant être éclairée en partie par transparence selon l'une quelconque des revendications précédentes, **caractérisée en ce qu'**un revêtement (6) monocouche ou multicouche, formé de préférence par une couche de vernis ou un film de vernis, est prévu sur le côté extérieur (A) au moins dans la zone de la fenêtre lumineuse (3), dans laquelle le revêtement (6) absorbe dans une large mesure les domaines spectraux de la lumière visible (3), dans lequel le revêtement (6) présente, pour l'éclairage partiel par transparence du corps de base (1), une pluralité de perforations (7, 7', 7", 7'"), qui traversent totalement le revêtement (6).

5. Partie d'habillage extérieure pouvant être éclairée en partie par transparence selon la revendication 4, **caractérisée en ce qu'**une couche de vernis transparent (8) scellant le revêtement (6) et les perforations (7, 7', 7", 7'"), laquelle peut être traversée par un rayonnement pour des domaines spectraux de la lumière visible, est appliquée au-dessus du revêtement (6) perforé.

6. Procédé de fabrication d'une partie d'habillage extérieure pouvant être éclairée en partie par transparence pour un véhicule à moteur (V) selon l'une quelconque des revendications précédentes 1 à 5, dans lequel le corps de base (1) est constitué d'un matériau polymère translucide ou non transparent,
dans lequel le corps de base (1) présente une épaisseur de paroi, un côté extérieur (A) visible lors d'une utilisation conforme à l'usage prévu sur le véhicule à moteur (V) et un côté intérieur (I) opposé au côté extérieur, et
dans lequel le corps de base (1) présente au moins un évidement (2) traversant le corps de base (1),
dans lequel une fenêtre lumineuse (3) remplissant l'évidement (2) est prévue pour l'éclairage partiel par transparence du corps de base (1),
comprenant les étapes suivantes :
- la fourniture du corps de base (1) ;
- la disposition de la fenêtre lumineuse (3) composée d'un matériau transparent, lequel peut être traversé par un rayonnement pour des domaines spectraux de la lumière visible avec une faible absorption, à l'intérieur de l'évidement (2) ;
- la liaison par liaison de matière du corps de base (1) et de la fenêtre lumineuse (3) ;
**caractérisé en ce que**
lesdites étapes font partie d'un procédé de moulage par injection à plusieurs composants, que
en plus au moins un film de contre-collage (4) disposé sur le côté extérieur (A) est prévu, dans lequel le film de contre-collage (4) est positionné de telle sorte que celui-ci recouvre côté extérieur la zone de transition (5) du corps de base (1) à la fenêtre lumineuse (3), dans lequel le film de contre-collage est placé dans l'outil de moulage par injection utilisé pour mettre en oeuvre le procédé de moulage par injection à plusieurs composants et est injecté par l'arrière du matériau de la fenêtre lumineuse (3) et du matériau du corps de base (1).

7. Procédé de fabrication d'une partie de revêtement extérieure pouvant être éclairée en partie par transparence pour un véhicule à moteur (V) selon la revendication 6, **caractérisé en ce que** dans une étape suivante, un revêtement (6) monocouche ou multicouche, formé de préférence par une couche de vernis ou un film de vernis, est appliqué sur le côté extérieur (A) au moins dans la zone de la fenêtre lumineuse (3), dans lequel le revêtement (6) absorbe dans une large mesure les domaines spectraux de la lumière visible, dans lequel le revêtement (6) est pourvu pour l'éclairage partiel par transparence du corps de base (1) d'une pluralité de perforations (7, 7', 7", 7'"), qui traversent totalement le revêtement (6).

8. Procédé de fabrication d'une partie d'habillage extérieure pouvant être éclairée en partie par transparence pour un véhicule à moteur (V) selon la revendication 7, **caractérisé en ce qu'**une couche de vernis transparent (8) scellant le revêtement (6) et les perforations (7, 7', 7", 7'"), laquelle peut être traversée par un rayonnement pour des domaines spectraux de la lumière visible avec une faible absorption, est appliquée au-dessus du revêtement (6) perforé.
